# EUROPEAN PATENT APPLICATION

(11) **EP 4 391 145 A1**
(43) Date of publication of application: **26.06.2024**
(21) Application number: 23788613.0
(22) Date of filing: 13.04.2023
(51) Int. Cl.: H01M 10/42, H01M 50/547, H01M 50/557, H01M 50/533, H01M 50/509

(54) **HYBRID BATTERY CELL AND HYBRID BATTERY MODULE COMPRISING SAME**

(30) Priority: 15.04.2022 KR 20220046873
(71) Applicant: LG Energy Solution, Ltd., Seoul 07335 (KR)
(72) Inventor: YOON, Dong Sik, Daejeon 34122 (KR)
(74) Representative: Plasseraud IP
(86) International application number: PCT/KR2023/004994
(87) International publication number: WO 2023/200264

(57) **Abstract**

A hybrid battery cell according to one example of the present invention comprises a first independent drive cell including a first positive electrode tab and a first negative electrode tab, a second independent drive cell provided to be independently driven of the first independent drive cell, and including a second positive electrode tab and a second negative electrode, and a cell housing exposing the first and second positive electrode tabs and the first and second negative electrode tabs, respectively, to the outside, and surrounding the first independent drive cell and the second independent drive cell.

## Description

### Technical Field

The present invention relates to a hybrid battery cell and a hybrid battery module comprising the same, and in detail, relates to a hybrid battery cell that as two or more independent drive cells, to which different electrode designs are applied, are disposed to one battery cell, the respective independent drive cells can be driven individually or together, and provide various outputs, and a hybrid battery module comprising the same.

This application claims the benefit of priority based on Korean Patent Application No. 10-2022-0046873 dated April 15, 2022, the disclosure of which is incorporated herein by reference in its entirety.

### Background Art

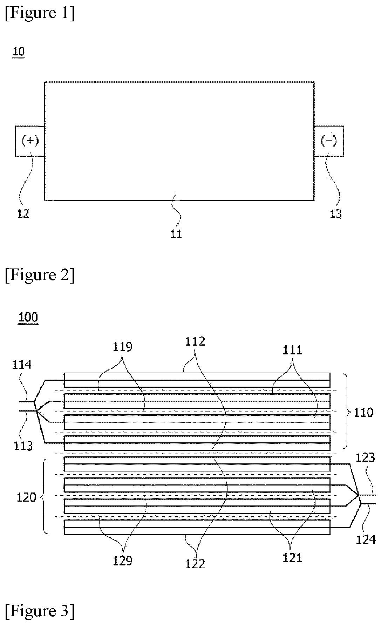

Figure 1 schematically illustrates a structure of a general secondary battery.

Referring to Figure 1, a secondary battery (10) generally comprises a plurality of unit cells (not shown) inside a housing (11). In addition, the secondary battery (10) has a form in which a pair of lead tabs (12, 13) connected to electrodes of the respective unit cells are exposed to the outside. The pair of lead tabs are composed of a positive electrode tab (12) and a negative electrode tab (13). The positive electrode tab (12) is connected to the positive electrodes of the respective unit cells, and the negative electrode tab (13) is connected to the negative electrodes of the respective unit cells.

Referring to Korean Laid-Open Patent Publication No. 2007-0053614, a laminated lithium-ion battery has a structure in which a plurality of negative electrodes and positive electrodes immersed in an electrolyte are laminated with a separator interposed therebetween and at the same time electrically connected in series or parallel.

Such secondary batteries generally form a battery as a pack by connecting a plurality of negative electrodes and positive electrodes rather than using single negative electrode and positive electrode.

Meanwhile, as application fields and products of secondary batteries are diversified, types of batteries are also diversified so that suitable output powers and capacities therefore can be provided.

As the required output powers vary according to the product group of secondary batteries, a technology capable of responding to various output powers with one secondary battery is required.

However, when batteries having various output powers are each used, the configuration of battery packs and/or battery modules can become complicated, and the process cost and defect rate can increase.

### Disclosure

### Technical Problem

The present invention is intended to provide a hybrid battery cell comprising two or more independent drive cells, to which different electrode designs are applied to one battery cell, and a hybrid battery module comprising the same.

Also, the present invention is intended to provide a hybrid battery cell capable of providing various output powers while respective independent drive cells are driven individually, or driven together, and a hybrid battery module comprising the same.

In addition, the present invention is intended to provide a hybrid battery cell in which independent drive cells are designed to operate with low power (long life-span) or high output power, and the respective independent drive cells can be used to be connected in series or parallel according to the purpose of use of the product group, and a hybrid battery cell comprising the same.

### Technical Solution

A hybrid battery cell according to one example of the present invention comprises a first independent drive cell including a first positive electrode tab and a first negative electrode tab, a second independent drive cell provided to be independently driven of the first independent drive cell, and including a second positive electrode tab and a second negative electrode, and a cell housing exposing the first and second positive electrode tabs and the first and second negative electrode tabs, respectively, to the outside, and surrounding the first independent drive cell and the second independent drive cell.

Also, the first positive electrode tab and the first negative electrode tab may each be exposed to one side of the cell housing, and the second positive electrode tab and the second negative electrode tab may each be exposed to the other side of the cell housing.

In addition, the first positive electrode tab and the first negative electrode tab may be disposed side by side and spaced apart from each other on one side of the cell housing, and the second positive electrode tab and the second negative electrode tab may be disposed side by side and spaced apart from each other on the other side of the cell housing.

Furthermore, the first independent drive cell and the second independent drive cell may have different types of electrode active materials. The independent drive cells may each have electrodes formed of different types of electrode active materials.

Also, the first independent drive cell and the second independent drive cell may have the same type of electrode active material, and the first independent drive cell and the second independent drive cell may be applied by different loading amounts of the electrode active material. The independent drive cells each have electrodes formed of the same type of electrode active material, wherein the loading amounts of the electrode active material forming the electrodes may be designed differently.

In addition, the first independent drive cell may be provided to be driven with relatively lower power than that of the second independent drive cell.

Furthermore, the second independent drive cell may be provided to be driven with a relatively higher output power than that of the first independent drive cell.

Also, the first and second independent drive cells may be laminated and disposed within the cell housing.

In addition, the first independent drive cell may comprise a plurality of first positive electrode plates electrically connected to the first positive electrode tab, a plurality of first negative electrode plates electrically connected to the first negative electrode tab, and separators separating adjacent first positive electrode plates and first negative electrode plates.

Furthermore, the second independent drive cell may comprise a plurality of second positive electrode plates electrically connected to the second positive electrode tab, a plurality of second negative electrode plates electrically connected to the second negative electrode tab, and separators separating adjacent second positive electrode plates and second negative electrode plates.

Also, a hybrid battery module related to one example of the present invention comprises the plurality of hybrid battery cells.

In addition, in the plurality of hybrid battery cells, the independent drive cells in the same type may be adjacently laminated and disposed up and down, and the independent drive cells in the same type may be connected in series or parallel.

Furthermore, in two adjacent hybrid battery cells, the first independent drive cells may be connected in series, and the second independent drive cells may be connected in series.

Also, in two adjacent hybrid battery cells, the first independent drive cells may be connected in parallel, and the second independent drive cells may be connected in parallel.

In addition, in the plurality of hybrid battery cells, the independent drive cells in different types may be adjacently laminated and disposed up and down.

Furthermore, in each hybrid battery cell, the first independent drive cell may be provided to be driven with relatively lower power than that of the second independent drive cell.

Also, in each hybrid battery cell, the second independent drive cell may be provided to be driven with a relatively higher output power than that of the first independent drive cell.

In addition, the hybrid battery cell according to one example of the present invention comprises n independent drive cells (n is a natural number of 2 or more) to which different types of electrode designs are applied, and the n independent drive cells are laminated and combined up and down, which are provided to be independently driven.

Furthermore, in one example of the present invention, the n independent drive cells may comprise at least one first independent drive cell to which the first electrode design is applied, and at least one second independent drive cell to which the second electrode design is applied.

In one example of the present invention, the first independent drive cell and the second independent drive cell are laminated up and down, and the first positive electrode tab and the first negative electrode tab of the first independent drive cell are positioned to be exposed to one side of the cell housing. and the second positive electrode tab and the second negative electrode tab of the second independent drive cell are positioned to be exposed to the other side of the cell housing.

In the present invention, the electrode design may vary as different types of active materials are applied to the first and second independent drive cells.

Alternatively, the electrode design may vary as the same type of active material is applied to the first and second independent drive cells and different amounts of the active material are loaded into the respective independent drive cells.

A hybrid battery module according to one example of the present invention may comprise a plurality of hybrid battery cells, wherein the hybrid battery cells may each have n (n is a natural number of 2 or more) independent drive cells having different types of electrode designs.

Also, in the plurality of hybrid battery cells, the independent drive cells in the same type may be laminated and combined up and down.

In addition, the plurality of hybrid battery cells may be connected in series between the independent drive cells in the same type, and the n hybrid battery cells may be connected in parallel between the independent drive cells in the same type.

Furthermore, the hybrid battery cell comprises a first independent drive cell having a first electrode design and a second independent drive cell having a second electrode design.

Also, the plurality of hybrid battery cells is in series between the first independent drive cells and connected in series between the second independent drive cells, and the first independent drive cells and the second independent drive cells are provided to be independently driven.

In addition, the hybrid battery module according to one example of the present invention comprises a plurality of hybrid battery cells, wherein the hybrid battery cells each have n (n is a natural number of 2 or more) independent drive cells having different types of electrode designs, and in the n hybrid battery cells, the independent drive cells in different types may be adjacently laminated and disposed up and down.

Furthermore, the plurality of hybrid battery cells may be connected in series between the independent drive cells in different types.

Also, the plurality of hybrid battery cells may be connected in parallel between the independent drive cells in different types.

In addition, the hybrid battery cell may comprise a first independent drive cell having a first electrode design and a second independent drive cell having a second electrode design, and the n hybrid battery cells may be laminated and disposed so that the first independent drive cells and the second independent drive cells are adjacently crossed up and down. At this time, in the plurality of hybrid battery cells, the first independent drive cells and the second independent drive cells which are adjacent up and down may be connected in series. Alternatively, the plurality of hybrid battery cells may be connected in parallel between the first independent drive cells and the second independent drive cells which are adjacent up and down.

### Advantageous Effects

As described above, the hybrid battery cell related to one example of the present invention, and the hybrid battery module comprising the same have the following effects.

Conventionally, after the low-power battery cell and the high-output power battery cell were manufactured separately, the low-power battery cell and the high-output battery cell were combined by a welding method, whereby the configuration of the battery module was complicated, and the process cost was increased.

According to the present invention, by designing the independent drive cells with low power (long life-span) or high output power, the respective independent drive cells can be connected in series or parallel according to the purpose of use of the product group to implement a hybrid battery cell. Also, process cost reduction and defect rate reduction can be promoted through process simplification.

In addition, while one battery cell is provided with two or more independent drive cells to which different electrode designs are applied, and the respective independent drive cells are driven individually or together, it is possible to provide various output powers.

Furthermore, the present invention can also drive the hybrid battery cell with a high output power, or can also drive it with low power for a long time, according to the purpose of use of the product group. Also, upon a power failure of one independent drive cell, another independent drive cell can be driven as a backup power source.

In addition, by connecting the hybrid battery cells in series or parallel, it is capable of simplifying an assembly process between the hybrid battery cells, reducing process costs, and reducing the occurrence of a defect rate.

### Description of Drawings

Figure 1 schematically illustrates a structure of a general secondary battery.
Figure 2 schematically illustrates an electrode structure of an independent drive cell having two types of electrode designs according to one example of the present invention.
Figure 3 schematically illustrates a plan view of a battery cell having two types of electrode designs, according to an embodiment of the present invention.
Figure 4 is a configuration diagram of a first hybrid battery module according to one example of the present invention.
Figure 5 is a configuration diagram of a second hybrid battery module according to one example of the present invention.
Figure 6 is a configuration diagram of a third hybrid battery module according to one example of the present invention.
Figure 7 is a configuration diagram of a fourth hybrid battery module according to one example of the present invention.

### Mode for Invention

Hereinafter, a hybrid battery cell (hereinafter, also referred to as a `battery cell') according to one example of the present invention, and a hybrid battery module (hereinafter, referred to as a `battery module') comprising the same will be described in detail with reference to the drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

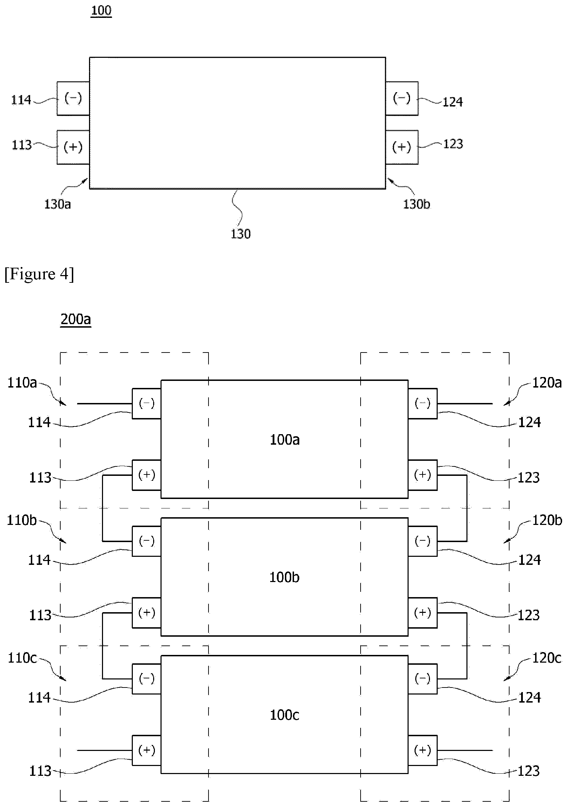

Figure 2 schematically illustrates an electrode structure of an independent drive cell having two types of electrode designs according to one example of the present invention, and Figure 3 schematically illustrates a plan view of a battery cell having two types of electrode designs, according to an embodiment of the present invention.

Referring to Figures 2 and 3, the hybrid battery cell (100) according to one example of the present invention comprises a first independent drive cell (110), a second independent drive cell (120), and a cell housing (130). Also, the cell housing (130) protects the first independent drive cell (110) and the second independent drive cell (120).

In addition, the first independent drive cell (110) refers to a battery cell manufactured according to a first electrode design. Then, the second independent drive cell (120) refers to a battery cell manufactured according to a second electrode design different from the first electrode design.

The first and second electrode designs may vary as different types of active materials are applied to the first independent drive cell and the second independent drive cell.

Alternatively, the first and second electrode designs may vary by applying the same type of active material to the first independent drive cell and the second independent drive cell and setting different loading amounts of the active material to the respective independent drive cells.

For example, the same type of electrode active material may be applied to the first independent drive cell and the second independent drive cell, and the first independent drive cell may be designed with a lower loading amount than that of the second independent drive cell. Here, the loading amount is a capacity per unit area of the electrode.

As one example, the first independent drive cell (110) may be provided to be capable of being driven with lower power than that of the second independent drive cell (120). Also, the second independent drive cell (120) may be provided to be capable of being driven with higher output power than that of the first independent drive cell (110).

In addition, the first independent drive cell (110) and the second independent drive cell (120) may be provided to be independently driven.

As such, the hybrid battery cell (100) is provided with different types of independent drive cells (110, 120) driven by different powers.

In this example, the first independent drive cell (110) and the second independent drive cell (120) are each provided with n (n is a natural number greater than or equal to 1), where the n first independent drive cells (110) and the n second independent drive cells (120) may be laminated and disposed up and down.

The first independent drive cell (110) and the second independent drive cell (120) may be laminated and disposed in the cell housing (130) so that a first positive electrode tab (113) and a first negative electrode tab (114) of the first independent drive cell (110) are disposed in different directions from a second positive electrode tab (123) and a second negative electrode tab (124) of the second independent drive cell (120).

The first independent drive cell (110) comprises at least one first positive electrode plate (111), at least one first negative electrode plate (112), a first positive electrode tab (113), a first negative electrode tab (114), and a separator (119).

The first positive electrode tab (113) is a lead tab electrically connected to at least one first positive electrode plate (111), which is provided to protrude to one side (130a) of the cell housing (130), and the first negative electrode tab (114) is a lead tab electrically connected to at least one first negative electrode plate (112), which is provided to protrude to one side (130a) of the cell housing (130).

In this example, the first positive electrode tab (113) and the first negative electrode tab (114) are disposed side by side and spaced apart from each other on one side (130a) of the cell housing (130).

The second independent drive cell (120) comprises at least one second positive electrode plate (121), at least one second negative electrode plate (122), a second positive electrode tab (123), a second negative electrode tab (124), and a separator (129).

The second positive electrode tab (123) is a lead tab electrically connected to at least one second positive electrode plate (121), which is provided to protrude to the other side (130b) of the cell housing (130), and the second negative electrode tab (124) is a lead tab electrically connected to one second negative electrode plate (122), which is provided to protrude to the other side (130b) of the cell housing (130).

In this example, the second positive electrode tab (123) and the second negative electrode tab (124) are disposed side by side and spaced apart from each other on the other side (130a) of the cell housing (130).

As one example, the first independent drive cell (110) and the second independent drive cell (120) may be laminated and disposed up and down. At this time, the first positive electrode tab (113) and the first negative electrode tab (114) of the first independent drive cell (110) are positioned on one side (130a) of the cell housing (130), and the second positive electrode tab (123) and the second negative electrode tab (124) of the second independent drive cell (120) are positioned on the other side (130b) of the cell housing (130).

While the first independent drive cell (110) and the second independent drive cell (120) may be driven individually or together, it is possible to correspond to power suitable for the purpose of use of the product group.

In addition, when the first independent drive cell (110) driven with high output power is discharged, it is possible to prevent the product from being suddenly discharged while the second independent drive cell (120) is driven with low power.

Hereinafter, the hybrid battery module will be described with reference to Figures 4 to 7.

The hybrid battery module comprises a plurality of hybrid battery cells (100a to 100c). The plurality of hybrid battery cells (100a to 100c) is embedded in a module housing (not shown).

The plurality of hybrid battery cells (100a to 100c) may be laminated and disposed up and down.

In addition, according to the purpose of use of the hybrid battery module, the plurality of hybrid battery cells (100a to 100c) may be connected in any one way of serial connection between the first independent drive cells, serial connection between the second independent drive cells, parallel connection between the first independent drive cells, parallel connection between the second independent drive cells, serial connection between the first independent drive cell and the second independent drive cell, or parallel connection between the first independent drive cell (110) and the second independent drive cell (120) of the respective hybrid battery cells (100a to 100c). That is, in the adjacent hybrid battery cells, the positive electrode tabs or the negative electrode tabs of the respective hybrid battery cells are electrically connected in series or parallel.

In this example, for convenience of explanation, the hybrid battery modules are classified into and referred to as "first hybrid battery module (200a) to fourth hybrid battery module (200d)" according to the electrical connection structure between the hybrid battery cells (100) constituting the hybrid battery modules.

Also, the plurality of hybrid battery cells (100a to 100c) is referred to as "first hybrid battery cell (100a) to third hybrid battery cell (100c)" and described.

In addition, the first hybrid battery cell (100a) to the third hybrid battery cell (100c) have the same structure as the battery cell (100) described through Figure 2. That is, each of the battery cells (100a, 100b, 100c) comprises first and second independent drive cells (110, 120).

In addition, the first independent drive cell and the second independent drive cell constituting the first hybrid battery cell (100a) are referred to as "1a independent drive cell and 2a independent drive cell", the first independent drive cell and the second independent drive cell constituting the second hybrid battery cell (100b) are referred to as "1b independent drive cell and 2b independent drive cell", and the first independent drive cell and the second independent drive cell constituting the third hybrid battery cell (100c) are referred to as "1c independent drive cell and 2c independent drive cell".

Figure 4 is a configuration diagram of the first hybrid battery module (200a), which illustratively shows a structure in which n hybrid battery cells, to which two types of independent drive cells are applied, are connected in series between independent drive cells in the same type.

In the first hybrid battery module (200a), the plurality of hybrid battery cells (100a to 100c) is connected in series between the first independent drive cells (110a to 110c) on one side of the module housing, and connected in series between the second independent drive cells (120a to 120c) on the other side of the module housing.

The first hybrid battery module (200a) may be provided so as to enable left and right separate driving. In the first hybrid battery module (200a), the first independent drive cells (110a to 110c) can be separately driven from the second independent drive cells (120a to 120c).

In the first hybrid battery module (200a), the first positive electrode tab (113) of the 1a independent drive cell (110a) and the first negative electrode tab (114) of the 1b independent drive cell (1 10b) may be connected in series, and the first positive electrode tab (113) of the 1b independent drive cell (110b) and the first negative electrode tab (114) of the 1c independent drive cell (110c) may be connected in series.

In the first hybrid battery module (200a), the second positive electrode tab (123) of the 2a independent drive cell (120a) and the second negative electrode tab (124) of the 2b independent drive cell (120b) may be connected in series, and the second positive electrode tab (123) of the 2b independent drive cell (120b) and the second negative electrode tab (124) of the 2c independent drive cell (120c) may be connected in series.

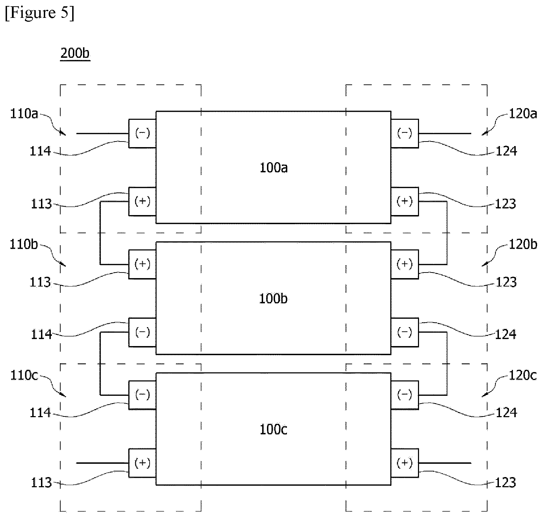

Figure 5 is a configuration diagram of the second hybrid battery module (200b), which illustratively shows a structure in which n hybrid battery cells, to which two types of independent drive cells are applied, are connected in parallel between independent drive cells in the same type.

In the second hybrid battery module (200b), the plurality of hybrid battery cells (100a to 100c) is connected in parallel between the first independent drive cells (110) on one side of the module housing, and connected in parallel between the second independent drive cells (120) on the other side of the module housing.

Specifically, in the second hybrid battery module (200b), the first positive electrode tab (113) of the 1a independent drive cell (110a) and the first positive electrode tab (113) of the 1b independent drive cell (110b) are connected in parallel. The first negative electrode tab (114) of the 1b independent drive cell (110b) and the first negative electrode tab (114) of the 1c independent drive cell (110c) may be connected in parallel.

Then, in the second hybrid battery module (200b), the second positive electrode tab (123) of the 2a independent drive cell (120a) and the second positive electrode tab (123) of the 2b independent drive cell (120b) may be connected in parallel, and the second negative electrode tab (124) of the 2b independent drive cell (120b) and the second negative electrode tab (124) of the 2c independent drive cell (120c) may be connected in parallel.

In addition, the second hybrid battery module (200b) may be provided so as to enable left and right separate driving. In the second hybrid battery module (200b), the first independent drive cells (110a to 110c) can be separately driven from the second independent drive cells (120a to 120c).

The second hybrid battery module (200b) differs from the first hybrid battery module (200a) in that the welding directions of the positive electrode tab and the negative electrode tab are changed.

The first hybrid battery module (200a) and the second hybrid battery module (200b) may be suitable when different types of active materials are used for the first independent drive cell and the second independent drive cell. As the active material, NCMA or LTO, and the like may be used.

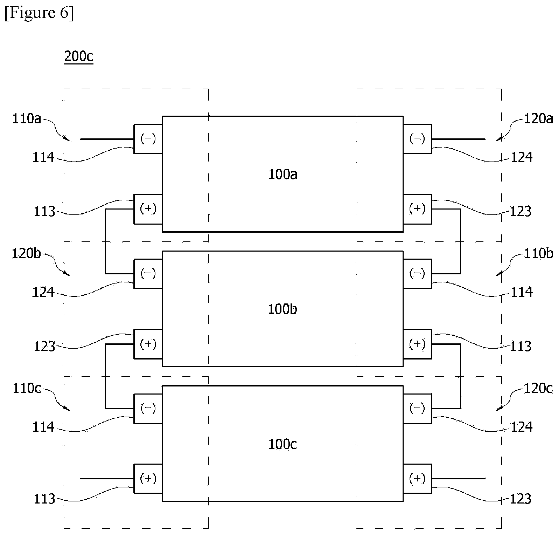

Figure 6 is a configuration diagram of a third hybrid battery module (200c), which illustratively shows a structure in which a plurality of hybrid battery cells, to which two types of independent drive cells are applied, is connected in series between different types of independent drive cells. The third hybrid battery module (200c) may be provided so as to enable left and right separate driving.

Referring to Figure 6, the third hybrid battery module (200c) has a structure in which the plurality of hybrid battery cells (100a to 100c) is connected in series, but the first independent drive cell (110a) of any one hybrid battery cell (100a) and the second independent drive cell (120b) of another hybrid battery cell (100b) are mixed-driven. The third hybrid battery module (200c) has a structure in which first independent drive cells and second independent drive cells are cross-laminated.

Specifically, in the third hybrid battery module (200c), the first positive electrode tab (113) of the 1a independent drive cell (110a) and the second negative electrode tab (124) of the 2b independent drive cell (120b) may be connected in series, and the second positive electrode tab (123) of the 2b independent drive cell (120b) and the first negative electrode tab (114) of the 1c independent drive cell (110c) may be connected in series.

In the third hybrid battery module (200c), the second positive electrode tab (123) of the 2a independent drive cell (120a) and the first negative electrode tab (114) of the 1b independent drive cell (110b) may be connected in series, and the first positive electrode tab (113) of the 1b independent drive cell (110b) and the second negative electrode tab (124) of the 2c independent drive cell (120c) may be connected in series.

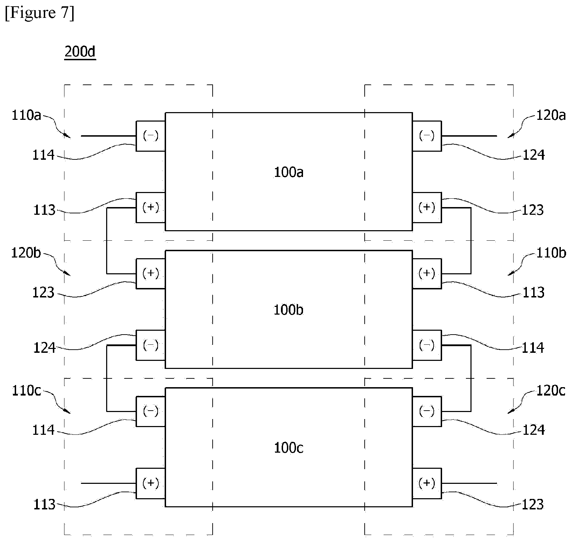

Figure 7 is a configuration diagram of a fourth hybrid battery module (200d), which illustratively shows a structure in which a plurality of hybrid battery cells, to which two types of independent drive cells are applied, is connected in parallel between different types of independent drive cells.

Referring to Figure 7, the fourth hybrid battery module (200d) may be provided so that a plurality of hybrid battery cells (100a to 100c) is connected in parallel, but the first independent drive cell (110) of any one hybrid battery cell (100) and the second independent drive cell (120) of another hybrid battery cell (100) are mixed-driven. The fourth hybrid battery module (200d) has a structure in which first independent drive cells and second independent drive cells are cross-laminated.

Specifically, in the fourth hybrid battery module (200d), the first positive electrode tab (113) of the 1a independent drive cell (110a) and the second positive electrode tab (123) of the 2b independent drive cell (120b) may be connected in parallel, and the second negative electrode tab (124) of the 2b independent drive cell (120b) and the first negative electrode tab (114) of the 1c independent drive cell (110c) may be connected in parallel.

Then, in the fourth hybrid battery module (200d), the second positive electrode tab (123) of the 2a independent drive cell (120a) and the first positive electrode tab (113) of the 1b independent drive cell (110b) may be connected in parallel, and the first negative electrode tab (114) of the 1b independent drive cell (110b) and the second negative electrode tab (124) of the 2c independent drive cell (120c) may be connected in parallel. The fourth hybrid battery module (200d) is provided so as to enable left and right separate driving.

In addition, the third hybrid battery module (200c) and the fourth hybrid battery module (200d) have a structure in which first independent drive cells and second independent drive cells are cross-laminated, which may be a structure suitable for a case where the same active material is applied to the first independent drive cells and the second independent drive cells, and their loading amounts are different.

Meanwhile, since the type and loading amount of the active material can be changed according to product groups, a detailed description thereof will be omitted in this example.

As such, in the hybrid battery module related to one example of the present invention, series or parallel connections between hybrid battery cells may be variously made.

One example of the present invention as described above has been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to a hybrid battery cell related to one example of the present invention, and a hybrid battery module comprising the same, by designing the independent drive cells with low power (long life-span) or high output power, the respective independent drive cells can be connected in series or parallel according to the purpose of use of the product group to implement a hybrid battery cell.

## Claims

1. A hybrid battery cell comprising:
a first independent drive cell including a first positive electrode tab and a first negative electrode tab;
a second independent drive cell provided to be independently driven of the first independent drive cell, and including a second positive electrode tab and a second negative electrode; and
a cell housing exposing the first and second positive electrode tabs and the first and second negative electrode tabs, respectively, to the outside, and surrounding the first independent drive cell and the second independent drive cell.

2. The hybrid battery cell according to claim 1, wherein
the first positive electrode tab and the first negative electrode tab are each exposed to one side of the cell housing, and
the second positive electrode tab and the second negative electrode tab are each exposed to the other side of the cell housing.

3. The hybrid battery cell according to claim 1, wherein
the first independent drive cell and the second independent drive cell have different types of electrode active materials.

4. The hybrid battery cell according to claim 1, wherein
the first independent drive cell and the second independent drive cell have the same type of electrode active material, and
the first independent drive cell and the second independent drive cell are applied by different loading amounts of the electrode active material.

5. The hybrid battery cell according to claim 1, wherein
the first independent drive cell is provided to be driven with relatively lower power than that of the second independent drive cell.

6. The hybrid battery cell according to claim 1, wherein
the second independent drive cell is provided to be driven with a relatively higher output power than that of the first independent drive cell.

7. The hybrid battery cell according to claim 1, wherein
the first and second independent drive cells are laminated and disposed within the cell housing.

8. The hybrid battery cell according to claim 1, wherein
the first independent drive cell comprises a plurality of first positive electrode plates electrically connected to the first positive electrode tab, a plurality of first negative electrode plates electrically connected to the first negative electrode tab, and separators separating adjacent first positive electrode plates and first negative electrode plates, and
the second independent drive cell comprises a plurality of second positive electrode plates electrically connected to the second positive electrode tab, a plurality of second negative electrode plates electrically connected to the second negative electrode tab, and separators separating adjacent second positive electrode plates and second negative electrode plates.

9. A hybrid battery module comprising a plurality of hybrid battery cells according to claim 1.

10. The hybrid battery module according to claim 9, wherein
in the plurality of hybrid battery cells, the independent drive cells in the same type are adjacently laminated and disposed up and down, and
the independent drive cells in the same type are connected in series or parallel.

11. The hybrid battery module according to claim 9, wherein
in two adjacent hybrid battery cells, the first independent drive cells are connected in series, and the second independent drive cells are connected in series.

12. The hybrid battery module according to claim 9, wherein
in two adjacent hybrid battery cells, the first independent drive cells are connected in parallel, and the second independent drive cells are connected in parallel.

13. The hybrid battery module according to claim 9, wherein
in the plurality of hybrid battery cells, the independent drive cells in different types are adjacently laminated and disposed up and down.

14. The hybrid battery module according to claim 9, wherein
in each hybrid battery cell, the first independent drive cell is provided to be driven with relatively lower power than that of the second independent drive cell.

15. The hybrid battery module according to claim 9, wherein
in each hybrid battery cell, the second independent drive cell is provided to be driven with a relatively higher output power than that of the first independent drive cell.
